# EUROPEAN PATENT APPLICATION

(11) **EP 1 111 604 A1**
(43) Date of publication of application: **27.06.2001**
(21) Application number: 00940867.5
(22) Date of filing: 28.06.2000
(51) Int. Cl.: G11B 7/24, G11B 7/005

(54) **OPTICAL RECORDING MEDIUM AND METHOD FOR READING OPTICAL RECORDING MEDIUM**

(30) Priority: 28.06.1999 JP 18259299
(71) Applicant: Sony Corporation, Tokyo 141-0001 (JP)
(72) Inventor: SAKO, Yoichiro, Sony Corporation, Shinagawa-ku, Tokyo 141-0001 (JP); OGAWA, Hiroshi, Sony Corporation, Shinagawa-ku, Tokyo 141-0001 (JP); INOKUCHI, Tatsuya, Sony Corporation, Shinagawa-ku, Tokyo 141-0001 (JP)
(74) Representative: Ayers, Martyn Lewis Stanley
(86) International application number: JP0004256
(87) International publication number: WO0101408

(57) **Abstract**

An optical disc having a plurality of recording layers provided one over the other. It includes a light-transmissive substrate, a first recording layer provided on one side of the substrate, a second recording layer provided over the first recording layer and having a lead-in area having necessary data for at least data reading, and an intermediate layer provided between the first and second recording layers. The first recording layer is provided at the outside of the lead-in area.

## Description

### Technical Field

The present invention relates to an optical recording medium having a plurality of recording layers formed therein, and a method for reading data recorded in the optical recording medium.

### Background Art

Conventionally, as a recording medium for a variety of information such as audio information, video information, etc., optical discs are widely used from which information recorded therein is read out optically, namely, using a light beam. There have recently been proposed such optical discs having formed therein many recording layers for the purpose of recording a further increased amount of information.

As an optical disc having a plurality of recording layers formed therein, there has been proposed a one designed such that a light beam is directed from one side of a substrate of the optical disc to read data from each of the recording layers.

This optical disc has a first recording layer formed on one side of a light-transmissive substrate, a light-transmissive intermediate layer formed on the first recording layer, and a second recording layer formed on the intermediate layer. The first recording layer is formed as a translucent layer which transmits a constant amount, and reflects a constant amount, of an incident light beam from the substrate side so that the light beam is incident upon the second recording layer. By forming the first recording layer located at the light beam-incident side from a translucent material and the second recording layer from a highly reflective material, it is possible to detect a reflected light from each of the first and second recording layers and thus read information signal recorded in each of the recording layers.

Data signal recorded in each of the plurality of recording layers formed in the optical disc is read by controlling the focused position of the light beam incident upon the optical disc. That is, by focusing the incident light beam on a desired one of the recording layers, data recorded in that recording layer can be read.

In the conventional optical disc having a plurality of recording layers formed therein, the recording layers are formed one over the other in a common area extending between the inside and outside of the optical disc. In case the plurality of recording layers is fully overlaid one over the other, one of the recording layers overlying the other will have only a reflectance which is limited to the transmittance of the other recording layer, and thus the one recording layer cannot reflect the light beam with a sufficient reflectance. As a result, the signal level based on the reflected light from the one recording layer is too low for data recorded in this optical disc to be read by the conventional optical disc player which requires a high reflectance of the recording layer. If the light transmittance of the other recording layer is increased for a higher reflectance of the one recording layer, the reflectance of the other recording layer will be lower, it will be difficult to build an optical disc player capable of reading data from both the one and other recording layers.

Also the recording layers formed in the conventional optical disc are similar in configuration to each other between the internal and outer circumferences of the optical disc. Each of the recording layers has formed in the internal circumferential portion of the optical disc a lead-in area in which control data required for reading data such as audio and video information, etc. are recorded, and at the outside of the lead-in area a data area in which data such as audio and video information are recorded. The control data required for data reading includes address information indicating recorded positions of data in the data area.

If the recording layers are nearly entirely overlaid over the other on the substrate of the optical disc and the control data, etc. are recorded in a similar form, when data such as audio information and video information recorded in each of the recording layers is read with the optical disc loaded in the optical disc player, reflection of a part of a light beam incident upon one of the recording layers and passing through the latter by the other recording layer will possibly add the control data recorded in the other recording layer as a noise component to the control data recorded in the lead-in area of the one recording layer and which is to be first read. In this case, the control data in the lead-in area may not possibly be read accurately so that a desired recording layer cannot be selected or no data can be read from the desired recording layer.

### Disclosure of the Invention

Accordingly, the present invention has an object to overcome the above-mentioned drawbacks of the prior art by providing an optical recording medium having a plurality of recording layers formed therein for a larger recording capacity, in which each of the recording layers can positively be selected and thus data recorded in each recording layer can accurately be read, and a method for reading data from the optical recording medium.

The present invention has another object to provide an optical recording medium interchangeable with optical discs for use with a conventional optical disc player requiring a high reflectance, and a method for reading data from the optical recording medium.

The above object can be attained by providing an optical recording medium including according to the present invention:
a light-transmissive substrate;
a first recording layer provided on one side of the substrate;
a second recording layer provided over the first recording layer and having a lead-in area having recorded therein necessary data for at least data reading; and
an intermediate layer provided between the first and second recording layers;
the first recording layer being provided at the outside of the lead-in area.

Also the above object can be attained by providing an optical recording medium including according to the present invention:
a light-transmissive substrate;
a first recording layer provided on one side of the substrate;
a second recording layer provided over the first recording layer and having a lead-in area having recorded therein necessary data for at least data reading; and
an intermediate layer provided between the first and second recording layers;
at least a part of the side opposite to the lead-in area of the first recording layer being mirror-finished.

Also the above object can be attained by providing an optical recording medium including according to the present invention;
a light-transmissive substrate; and
at least a first recording layer and second recording layer, any one of which is provided on one side of the substrate, the other recording layer being provided over the one recording layer with an intermediate layer being provided between the first and second recording layers;
there being provided a lead-in area having recorded therein necessary data for at least data reading.

Also the above object can be attained by providing a method for reading an optical recording medium including a light-transmissive substrate, and at least a first recording layer and second recording layer, any one of which is provided on one side of the substrate, the other recording layer being provided over the one recording layer with an intermediate layer being provided between the first and second recording layers, there being provided a lead-in area having recorded therein necessary data for at least data reading, the method including, according to the present invention, steps of:
reading data recorded in the lead-in area of the second recording layer in the optical recording medium; and
reading data recorded in the first recording layer.

Also the above object can be attained by providing a method for reading an optical recording medium including a light-transmissive substrate, a first recording layer provided on one side of the substrate, a second recording layer provided over the first recording layer and having a lead-in area having recorded therein necessary data for at least data reading, and an intermediate layer provided between the first and second recording layers, the first recording layer being provided at the outside of the lead-in area, the method including, according to the present invention, steps of:
reading data recorded in the lead-in area of the second recording layer in the optical recording medium; and
reading data recorded in the first recording layer.

Also the above object can be attained by providing a method for reading an optical recording medium including a light-transmissive substrate, a first recording layer provided on one side of the substrate, a second recording layer provided over the first recording layer and having a lead-in area having recorded therein necessary data for at least data reading, and an intermediate layer provided between the first and second recording layers, at least a part of the side opposite to the lead-in area of the first recording layer being mirror-finished, the method including, according to the present invention, steps of:
reading data recorded in the lead-in area of the second recording layer in the optical recording medium; and
reading data recorded in the first recording layer.

Also the above object can be attained by providing an optical recording medium including according to the present invention:
a substrate;
a first recording layer provided on one side of the substrate;
a second recording layer provided over the first recording layer; and
an intermediate layer provided between the first and second recording layers;
the first and second recording layers being disposed to deviate from each other in the direction of the layer plane.

Also the above object can be attained by providing a method for reading an optical recording medium including a substrate and a first recording layer provided over the substrate and having an lead-in area, the method including, according to the present invention, steps of:
reading data recorded in the lead-in area;
judging, based on the data read from the lead-in area, whether there exists a second recording layer between the first recording layer and substrate; and
reading the second recording layer based on control data recorded in the lead-in area when it is determined that the second recording layer exists.

These objects and other objects, features and advantages of the present invention will become more apparent from the following detailed description of the preferred embodiments of the present invention when taken in conjunction with the accompanying drawings.

### Brief Description of the Drawings

FIG. 1 is a sectional view of an embodiment of the optical disc according to the present invention.

FIG. 2 is a plan view of the optical disc according to the present invention.

FIG. 3 shows the projection of a light beam towards the first and second recording layers provided in the optical disc according to the present invention.

FIG. 4 is a sectional view of another embodiment of the optical disc according to the present invention.

FIG. 5 is a block circuit diagram of an optical disc player for use with the optical disc according to the present invention.

FIG. 6 is a circuit diagram of a circuit to direct a light beam towards the optical disc according to the present invention in order to detect a focus error signal.

FIGS. 7A to 7C are plan views presenting emission of a light beam towards a four-element detector (photodetetcor) to detect a focus error signal using the astigmatism.

FIGS. 8A and 8B show an RF sum signal and focus error signal, respectively, detectable when a light beam is directed towards an optical disc in which the first and second recording layers are provided opposite to each other.

FIGS. 9A and 9B show an RF sum signal and focus error signal, respectively, detectable when a light beam is directed towards the optical disc according to the present invention.

### Best Mode for Carrying Out the Invention

The optical recording medium and optical recording medium reading method according to the present invention will be described in detail below:

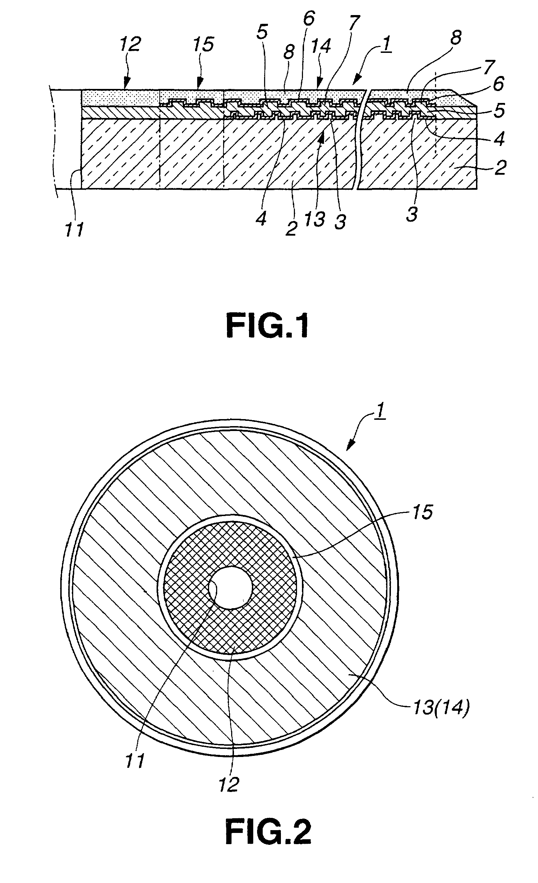

Referring now to FIG. 1, the optical recording medium according to the present invention is illustrated in the form of a sectional view. The optical recording medium is an optical disc generally indicated with a reference 1. As shown in FIG. 1, the optical disc 1 includes a substrate 2 formed from a synthetic resin such as a light-transmissive polycarbonate resin, glass or the like. The substrate 2 has formed on one side thereon a pit pattern 3 of tiny pits and lands corresponding to recorded audio information for example. In the pit pattern 3, a plurality of pits corresponding to recorded information forms a spiral recording track or concentric recording tracks. In case the substrate 2 is formed from a synthetic resin, the pit pattern 3 is formed by replication from a stamper during injection molding of the substrate 2. In case the substrate 2 is formed from glass, the pit pattern 3 is formed by the 2P (photo polymerization). In the 2P method, a light-settable resin such as an ultraviolet-settable resin is charged between a glass substrate and disc stamper, the light-settable resin is set or cured by ultraviolet rays irradiated from the glass substrate side, and thus a pattern of pits and lands on the stamper is replicated to form the pit pattern 3.

The substrate 2 used in the optical disc 1 according to the present invention is formed from a polycarbonate resin by injection molding. As mentioned above, the substrate 2 has recorded on one side thereof information as the pit pattern 3. The substrate 2 is formed to have a diameter of 12 cm and a thickness of about 1.2 mm similarly to the substrate of a so-called compact disc being a conventional optical disc whose diameter is 12 cm.

As shown in FIG. 1, a first recording layer 4 is formed on the one side of the substrate 2, on which the pit pattern 3 is formed, to cover the pit pattern 3. The first recording layer 4 is a translucent or semi-reflective layer which transmits a constant quantity, and reflects a constant quantity, of the light beam directed from the side of the substrate 2. For example, the first recording layer 4 is formed from silicone layers of Si₃N₄, SiO₂ and the like, respectively, to a thickness of about 100 to 500 nm. Namely, the first recording layer 4 is formed from the multiple layers of Si₃N₄, SiO₂ and the like, respectively, to have a multilayered structure on the substrate 2. The Si₃N₄, SiO₂ and other layeis are formed on the substrate 2 by vacuum evaporation or sputtering.

The first recording layer 4 has formed thereon an intermediate layer 5 of a light-transmissive ultraviolet-settable resin or the like, and a second recording layer 6 formed on the intermediate layer 5. The intermediate layer 5 is formed to have a predetermined thickness which optically separates the first and second recording layers 4 and 6 from each other so that they will not be positioned within the depth of focus of an objective lens which focuses the light beam on the recording layers 4 and 6. More specifically, the intermediate layer 5 is formed 30 µm or so thick for example. If the intermediate layer 5 is formed too thin, the first and second recording layers 4 and 6 will be positioned within the depth of focus of the objective lens and thus the reflected light from the first recording layer 4 and that from the second recording layer 6 cannot be separated sufficiently from each other. In this case, it will be difficult to accurately detect the reflected light from each of the recording layers 4 and 6. On the contrary, if the intermediate layer 5 is formed too thick, a spherical aberration will take place in the light beam directed towards the recording layer 6. Taking the above in consideration, the intermediate layer 5 is formed to have an appropriate thickness.

The intermediate layer 5 is formed by applying a light-transmissive ultraviolet-settable resin or the like to the first recording layer 4 by the spin coat method and irradiating ultraviolet rays to the applied resin to cure the latter. Otherwise, the intermediate layer 5 may be formed on the first recording layer 4 by applying the ultraviolet-settable resin or the like to a thickness of 5 to 10 µm on the first recording layer 4 and repeating this more than once to provide a lamination of the resin layers. Moreover, the intermediate layer 5 may be a transparent sheet attached on the first recording layer 4.

The intermediate layer 5 has formed on one side thereof a pit pattern 7 of tiny pits and lands corresponding to information recorded on the second recording layer 6, for example, audio information. Similarly to the pit pattern 3, the pit pattern 7 is formed from a plurality of pits defining a spiral recording track or concentric recording tracks. The pit pattern 7 can be formed by the 2P method used to form the pit pattern 3 on a glass substrate as mentioned above.

The second recording layer 6 is formed on the pit pattern 7 formed on one side of the intermediate layer 5 and over the first recording layer 4. Specifically, the second recording layer 6 is formed, on one side of the intermediate layer 5, from a highly reflective metal such as aluminum (Al), gold (Au), silver (Ag) or the like to reflect to the optical pickup located at the side of the substrate 2 the incident light beam having passed through the first recording layer 4. The second recording layer 6 has formed thereon a protective layer 8 formed from an ultraviolet-settable resin or the like to cover the second recording layer 6. The protective layer 8 is formed by applying the ultraviolet-settable resin or the like to the second recording layer 6 by the spin coat method and then irradiating ultraviolet rays to the applied resin to cure the latter.

Referring now to FIG. 2, there is illustrated the optical disc 1 in the form of a plan view. As shown, the optical disc 1 has a center hole 11 formed in the center thereof. A clamping area 12 is provided around the center hole 11. When the optical disc 1 is played in an optical disc player, it is set with the center hole 11 being placed in a centering area on a disc table of a disc rotation drive mechanism of the optical disc player and the clamping area 12 being placed on the disc table and clamped by a clamping member. Thus, the optical disc 1 is centered on the disc table and can b rotated on and with the latter.

Namely, the clamping area 12 to be clamped by the disc rotation drive mechanism is provided in the internal circumferential area of the optical disc 1, and the first and second recording layers 4 and 6 are provided at the outside of the clamping area 12.

The second recording layer 6 provided over the first recording layer 4 extends beyond the inner end of the first recording layer to near the clamping area 12 in the internal circumferential portion of the optical disc 1 as shown in FIG. 1. The second recording layer 6 has provided in the internal circumferential area thereof not opposite to the first recording layer 4 a lead-in area 15 having recorded therein at least a part of control data which is to be read before data such as audio information and the like pre-recorded in data recording areas 13 and 14 of the first and second recording layers 4 and 6, respectively. The control data recorded in the lead-in area includes data indicating a focus offset for control of the focused position of the light beam on the second recording layer 6 and data for use to control light beam tracking, these data forming a part of control data required for reading the data in the second recording layer 6 for example, and data indicating a focus offset for control of the focused position of the light beam on the first recording layer 4 and data for use to control light beam tracking, these latter data forming a part of control data required for reading the data in the first recording layer 4. The "focus offset" refers to a DC signal component for moving the objective lens optical-axially of the latter in order to move the focused position of the light beam converged by the objective lens in relation to either of the first and second recording layers 4 and 6.

In the lead-in area 15, there are recorded content information indicating the contents of data recorded in the data recording area 14 of the second recording layer 6 as control data for control of reading of the data recorded in the second recording layer 6, and also start address information or absolute time information indicating recording start time of each data.

The control data recorded in the lead-in area 15 is also recorded as a pit pattern 7 of tiny pits and lands similarly to data recorded in the data recording areas 13 and 14.

Since only the second recording layer 6 has the lead-in area 15 in the optical disc 1 according to the present invention, so after the optical disc 1 is loaded in the optical disc player, the control data recorded in the lead-in area 15 of the second recording layer 6 is read and then data recorded in the first or second recording layer 4 or 6 is read. Thus, the lead-in area 15 has recorded therein, besides address information or absolute time information indicating the beginning position of the data recording area 14 of the second recording layer 6, minimum necessary information for access to the first recording layer 4, such as address information or absolute time information on innermost circumferential position of the first recording layer 4, beginning position of the data recording area 13, etc.

Note that the lead-in area 15 is provided where it can be scanned by a light beam emitted from the optical pickup provided in the optical disc player when the optical disc 1 is loaded in the optical disc player. That is, the lead-in area 15 is provided to begin at a position outside the innermost circumferential position where data can be read from the optical disc 1 with the optical pickup moved towards the internal circumference of the optical disc 1.

As in the above, in the optical disc 1 according to the present invention, the beginning end of the second recording layer 6 extends inwardly beyond the internal circumference of the first recording layer 4 and the second recording layer 6 is extended by the lead-in area 15. So, the first recording layer 4 will be located at the outside of the lead-in area 15 as shown in FIG. 1. Thus, the portion of the optical disc 1 where the lead-in area 15 of the second recording layer 6 is provided has no light-beam reflecting layer between the substrate 2 upon which the light beam is incident and the second recording layer 6. Therefore, the light beam is incident without being attenuated by the first recording layer 4 and reflected by the lead-in area 15, so that the control data recorded in the lead-in area 15 can be read with a high accuracy without addition of a noise due to the first recording layer 4 as having previously been described concerning the prior art.

When the control data recorded in the lead-in area 15 of the second recording layer 6 is read, a return portion of the light beam, reflected by the lead-in area 15 of the second recording layer 6, can accurately be detected since a noise which would be caused by the reflection by the first recording layer 4 is not added to the return light because the light beam will not be reflected by the first recording layer 4.

From the optical disc 1 according to the present invention, information recorded in the first or second recording layer 4 or 6 is read by directing a light beam from the side of the substrate 2 and detecting a return light reflected by that recording layer 4 or 6 by a photodetector of an optical pickup disposed at the side of the substrate 2. To this end, the first recording layer 4 is formed from a translucent or semi-reflective layer which transmits a predetermined quantity of the incident light beam towards the second recording layer 6, and the second recording layer 6 is formed to reflect, with a high reflectance, the light beam having passed through the first recording layer 4 and incident thereupon. That is, the second recording layer 6 is more reflective than the first recording layer 4.

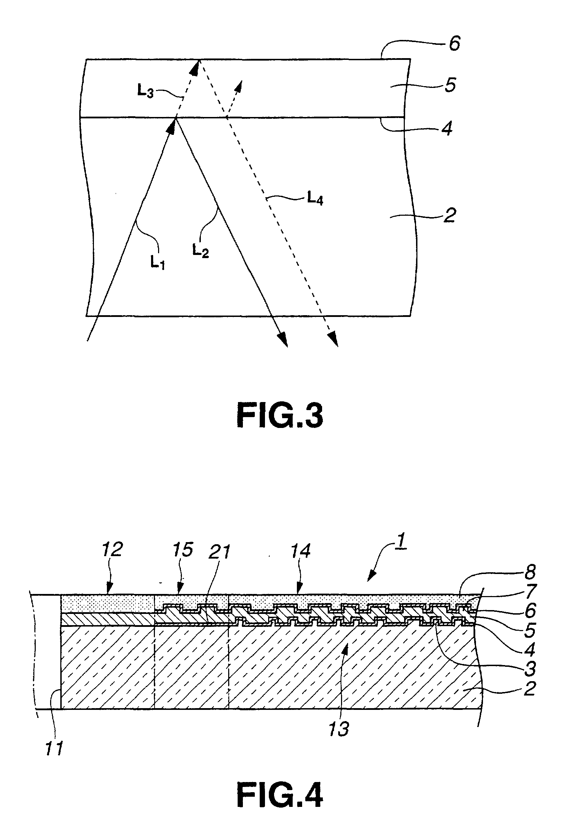

More specifically, the first recording layer 4 in the optical disc 1 according to the present invention has a reflectance of 11%, and the second recording layer 6 has a reflectance of 99%. On the assumption that the substrate 2 formed from polycarbonate resin diffuses and absorbs 5% of an incident light beam, when a light beam L₁ is directed from the side of the substrate 2, 10% of the incident light beam will be reflected by the first recording layer 4 as a return light L₂ and 85% of the incident light beam will be transmitted through the first recording layer 4 and incident upon the second recording layer 6, as shown in FIG. 3. At this time, since the intermediate layer 5 diffuses and absorbs almost none of the incident light beam, almost all the light beam (85%) will be incident upon the second recording layer 6 through the intermediate layer 5. The light beam L₃ incident upon the second recording layer 6 is reflected by the latter with the reflectance of 99% as a return light L₄. Then, the return light L₄ will be transmitted through the first recording layer 4 whose reflectance is 11% and substrate 2 which will diffuse and absorb 5% of an incident light, and go out of the optical disc 1. The ratio of the return light L₄ from the second recording layer 6 is about 71% of the light beam L₁ initially incident upon the substrate 2.

In another embodiment of the optical disc 1 according to the present invention, when the first recording layer 4 is formed to have a reflectance of 20% while the second recording layer 6 is formed to have a reflectance of 99%, the first recording layer 4 will reflect 18% of a light beam L₁ initially incident upon the substrate 2 as a return light L₂, while the second recording layer 6 will reflect about57% of the light beam L₁ initially incident upon the substrate 2 as a return light L₄.

Thus, with the first recording layer 4 formed to have a low reflectance while the second recording layer 6 is formed to have a higher reflectance, it is possible to assure a sufficient quantity of the return light reflected from the second recording layer 6. Data recorded in the data recording area 14 of the second recording layer 6 having the high reflectance, can satisfactorily be read by an optical disc player for a conventional so-called compact disc required to have a high reflectance.

By forming the second recording layer to have a high reflectance with which the conventional optical disc player for an optical disc having a high reflectance can read satisfactorily the second recording layer even when the light beam is incident upon the second recording layer 6 through the first recording layer 4, the control data recorded in the lead-in area 15 of the second recording layer 6 can be read with a higher accuracy.

In the lead-in area 15, there are also recorded data about the reflectance of the first recording layer 4 as control data which is to be read before reading data such as audio information and the like pre-recorded in the data recording areas 13 and 14 of the first and second recording layers 4 and 6, respectively. At least data about the reflectance of the first recording layer 4 is recorded in the lead-in area 15. By reading the data about the reflectance of the first recording layer 4 and selecting a gain of an amplification circuit which amplifies the read data and loop gain of a servo control circuit which will further be described, it is made possible to accurately read data recorded in the first recording layer 4. Of course, data about the reflectance of the second recording layer 6 may be recorded in the lead-in area 15, it be read out, and a gain of the amplification circuit and loop gain of the servo control circuit be selected based on the read data about the reflectance of the second recording layer 6, thereby reading the data recorded in the second recording layer 6.

Further, by recording in the lead-in area 15 of the second recording layer 6 in the optical disc 1 disc type data indicating that the optical disc 1 has provided therein the first recording layer 4 in addition to the second recording layer 6, it is possible to immediately recognize, by reading the disc type data in the lead-in area 15, that the optical disc 1 loaded in the optical disc player is a one having more than one recording layer. If the optical disc 1 loaded in the optical disc player can immediately be recognized, based on the read disc type data, to be a one having the first recording layer 4 as well, a play mode for reading data from the first and second recording layers 4 and 6 can be selected and thus data be read from either the first and second recording layers 4 and 6.

In the above optical disc 1, the second recording layer 6 has a higher reflectance than the first recording layer 4, the reflectance being a ratio of a quantity of return light with a quantity of a light beam incident upon the optical disc 1. Reversely, however, the first recording layer 4 may be designed to return a larger quantity of light than the second recording layer 6. For example, when the first recording layer 4 is formed to have a reflectance of 60% while the second recording layer 6 is formed to have a reflectance of 99%, the first recording layer 4 will return about 54% of the light beam incident thereupon while the second recording layer 6 will return about 15% of the incident light beam thereupon.

In case the first and second recording layers are formed to reflect the incident light beams, respectively, a lead-in area will be formed to extend the first recording layer 4 while the second recording layer 6 will not be provided on one side of the intermediate layer 5 opposite to the lead-in area of the first recording layer. Thus, control data recorded in the lead-in area of the first recording layer 4 can be read with a high reflectance without being influenced by the second recording layer 6 having a high reflectance and low light transmittance.

As shown in FIG. 1, in the aforementioned optical disc 1, the first recording layer 4 has not any lead-in area corresponding to the lead-in area 15 of the second recording layer 6, and the first recording layer 4 is provided only in an area outside the lead-in area 15. However, the present invention is not limited to this embodiment, but a pit pattern corresponding to the control data may not be provided in the substrate 2 and the first recording layer 4 may be extended inwardly by a flat mirror-finished layer 21 as shown in FIG. 4.

FIG. 4 is a sectional view of another embodiment of the optical disc according to the present invention. As shown, data such as control data is not recorded in an area of the first recording layer 4, corresponding to the lead-in area 15 of the second recording layer 6, namely, no pit pattern is formed on the substrate 2. Thereby, when the data recorded in the lead-in area 15 is read, a signal component of a light beam incident upon the optical disc 1, reflected by the first recording layer 4, is prevented from being added as a noise component to a signal read from the second recording layer 6. Thus, the data can accurately be read from the lead-in area 15.

In the optical disc 1 according to the present invention, since the second recording layer 2 has the lead-in area 15 having recorded therein necessary data for at least data reading, data read is started at the second recording layer 6 having the lead-in area 15. First the data in the lead-in area 15 is read out, so it is possible to easily control start of reading data such as audio information, etc. recorded in the first and second recording layers 4 and 6. Namely, either of the first and second recording layers 4 and 6 can easily be selected based on the control data recorded in the lead-in area 15. At this time, by recording in the lead-in area 15 disc type data indicating the reflectance of the first recording layer 4 and that the first recording layer 4 is provided in the optical disc 1, it is possible to immediately change and re-set gain settings of the amplifier circuit and servo control circuit in the optical disc player according to the type of the optical disc included in the data read from the lead-in area 15, and to easily read data recorded in the first recording layer 4 even when the optical disc used is a type having the first recording layer 4.

Next, reading data such as audio information, etc. recorded in the optical disc 1 organized as having been described in the foregoing will be described:

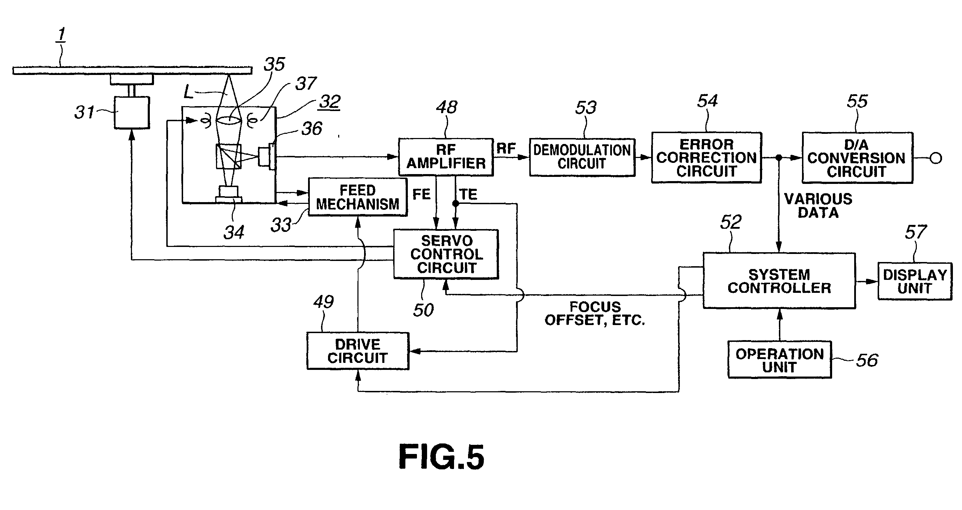

Referring now to FIG. 5, there is schematically illustrated in the form of a block diagram an optical disc player for playing the optical disc 1 according to the present invention. As shown, the optical disc player includes a disc rotation drive mechanism consisting of a spindle motor 31 to drive the optical disc 1 and a disc table provided at the top of a rotating shaft of the spindle motor 31 and in which the optical disc 1 placed on the disc table is driven to rotate by the spindle motor 31, and an optical pickup 32 to scan the first or second recording layer 4 or 6 in the optical disc 1 by a light beam and thus read data recorded in the first or second recording layer 4 or 6. The optical pickup 32 is moved radially of the optical disc 1 by a feed mechanism 33.

The optical pickup 32 includes a semiconductor laser 34 as a light source to emit a light beam for irradiation to the optical disc 1, optical elements such as an objective lens 35, etc. to selectively focus a light beam L emitted from the semiconductor laser 34 on the first or second recording layer 4 or 6 in the optical disc 1, a photodetector 36 to detect a return portion of the light beam incident upon and reflected by the first or second recording layer 4 or 6, and others. The objective lens 35 is supported by an actuator 37 to be movable in two directions perpendicular to each other, namely, in a focusing direction parallel to the optical axis of the objective lens 35 and a tracking direction in a plane perpendicular to the optical axis of the objective lens 35. Thus, the objective lens 35 is moved by the actuator 37 in the focusing direction and/or tracking direction based on a focus error signal and/or tracking error signal generated by detecting the return light from the optical disc 1, namely, from the first or second recording layer 4 or 6.

Based on data included in the control data recorded in the lead-in area 15 of the second recording layer 6 in the optical disc 1 and which indicates a focus offset and is used to control the focused position of the light beam, the objective lens 35 is controlled to focus the light beam on either the first or second recording layer 4 or 6.

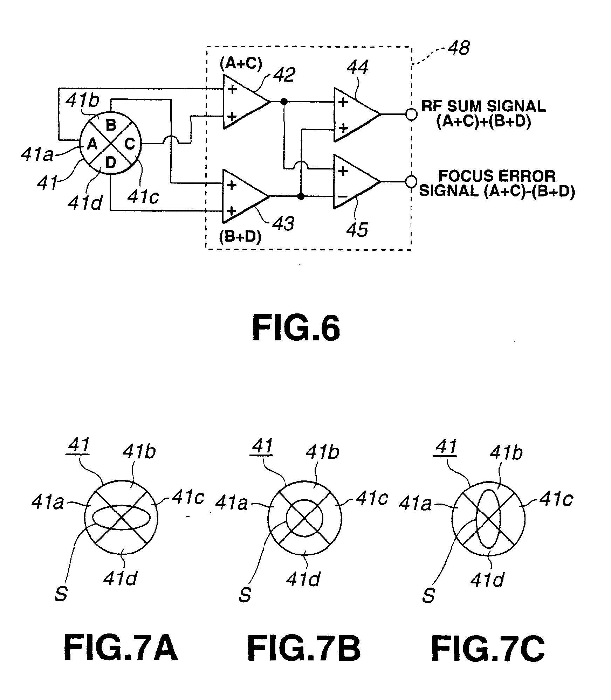

In the optical disc player used to play the optical disc 1 according to the present invention, when the optical disc 1 is placed on the disc table of the disc rotation drive mechanism and starts being played, the optical pickup 32 will be moved by the feed mechanism 33, based on a control signal supplied from a system controller 52 which will further be described later, to a position corresponding to the position of the lead-in area 15 in the optical disc 1. In this example, since the lead-in area 15 is provided inside the internal circumference of the second recording layer 6 in the optical disc 1 as shown in FIG. 1, the optical pickup 32 is moved by the feed mechanism 33 towards the inside of the optical disc 1 and the lead-in area 15 is scanned by a light beam focused by the objective lens 35. When the lead-in area 15 is thus scanned, the return light from the lead-in area 15 is passed through the objective lens 35 and is detected by the photodetector 36. This photodetector 36 has a four-element detector 41 consisting of first to fourth detector blocks 41a to 41d as shown in FIG. 6. The return light from the lead-in area 15 is detected by the first to fourth detector blocks 41a to 41d of the detector 41. Based on the detection outputs from the detector blocks 41a to 41d, an RF amplifier 48 which will further be described later detects an RF signal RF being a read signal of the data recorded in the lead-in area 15, and a focus error signal FE.

An RF sum signal RF is generated as a sum signal by the RF amplifier 48 which adds together the detection outputs from the first to fourth detector blocks 41a to 41b. The RF amplifier 48 includes first to third addition circuits 42 to 44. The first addition circuit 42 adds together detection signals A and C from the first and third detector blocks 41a and 41c, respectively, in the detector 41 to provide a detection output (A+C). The second addition circuit 43 adds together detection signals B and D from the second and fourth detector blocks 41b and 41d, respectively, in the detector 41 to provide a detection output (B+D). The third addition circuit 44 adds together these detection outputs to provide an RF signal RF (A+B+C+D). The RF signal RF is also an intensity signal of the light beam reflected by the lead-in area 15.

The focus error signal FE is detected by the astigmatic method. When the focused spot of the light beam incident upon the lead-in area 15 from the objective lens 35 is positioned at the side of the lad-in area 15 near the objective lens 35, namely, it is off focus, the shape of a beam spot S of the return light from the lead-in area 15 will be an ellipse whose major axis extends between the first and third detector blocks 41a and 41c of the detector 41, as shown in FIG. 7A. When the focused spot of the light beam is on the lead-in area 15, namely, it is in focus, the beam spot S has a circular shape evenly over the first to fourth detector blocks 41a to 41d as shown in FIG. 7B. When the objective lens 35 is positioned near the lead-in area 15 and thus the focused spot of the light beam is positioned at the protective layer 8 deeper than the lead-in area 15, the shape of the beam spot S will be an ellipse whose major axis extends between the second and fourth detector blocks 41b and 41d as shown in FIG. 7C. Thus, the shape of the beam spot S varies depending upon the focused position of the light beam, and differences among quantities of light to the first to fourth detector blocks 41a to 41d is detected to detect the focus error signal FE. The RF amplifier 48 includes a subtraction circuit 45 in addition to the first to third addition circuits 42, 43 and 44. The focus error signal FE is generated by the subtraction circuit 45 which subtracts the detection output (B+D) from the second addition circuit 43 which adds together the detection signals B and D from the second and fourth detection blocks 41b and 41d of the detector 41 from the detection output (A+C) from the first addition circuit 42 which adds together the detection signals A and C from the first and third detector blocks 41a and 41c. The focus error signal FE is {(A+C)-(B+D)}. This signal FE is supplied to a servo control circuit 50. Based on the supplied focus error signal FE, the servo control circuit 50 will control the actuator 37 to move the objective lens 35 in the focusing direction until the light beam is focused on the lead-in area 15.

In the optical disc player which plays the optical disc 1 according to the present invention, when scan of the lead-in area 15 by a light beam from the optical pickup 32 is started, the objective lens 35 is controlled to move in a direction from a position off the lead-in area 15 towards a position towards the lead-in area 15 for the incident light beam to be focused on the lead-in area 15.

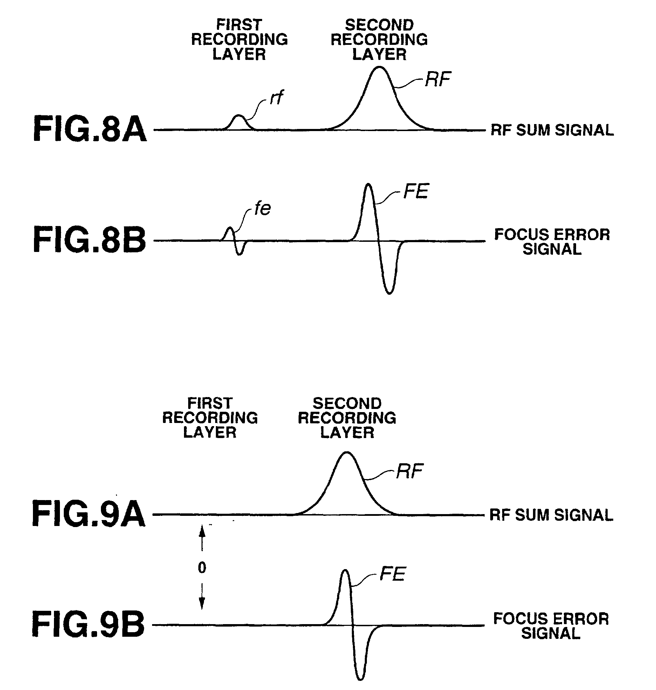

When there is loaded into the optical disc player an optical disc in which the first recording layer 4 is formed to extend to a position where it is opposite to the lead-in area 15 of the second recording layer 6 as shown in FIG. 4 for example, the light beam reflected by the first recording layer 4 is detected by the photodetector 36 which will generate an RF sum signal rf and focus error signal fe based on the light beam reflected by the first recording layer 4. Thereafter, the light beam passed through the first recording layer 4 and reflected by the lead-in area 15 of the second recording layer 6 is detected by the photodetector 36 which will generate an RF sum signal RF and focus error signal FE based on the light beam reflected by the lead-in area 15. The above is shown in FIGS. 8A and 8B.

In case the optical disc 1 shown in FIG. 1 is loaded in the optical disc player, only the light beam reflected by the lead-in area 15 of the second recording layer 6 is detected by the photodetector 36 which will thus generate an RF sum signal RF and focus error signal FE based on the light beam reflected by the lead-in area 15, as shown in FIGS. 9A and 9B, since the optical disc 1 has not provided therein at a position opposite to the lead-in area 15 the first recording layer 4 which will reflect the light beam. Therefore, only the RF sum signal RF and focus error signal FE can be detected based on the light beam reflected from the lead-in area 15 of the second recording layer 6 in the optical disc 1 shown in FIG. 1. So, the light beam from the optical pickup 32 can positively be focused on the second recording layer 6 having the lead-in area 15 and data recorded in the lead-in area 15 can be read out with a high accuracy without containing a noise component caused by the light beam passing through the first recording layer 4.

Also when the optical disc 1 having the mirror-finished layer 21 of the first recording layer 4, opposite to the lead-in area 15 as shown in FIG. 4, is played in the optical disc player, only an extremely small part of the light beam is reflected by the mirror-finished layer 21, so an RF signal rf and focus error signal fe generated based on the reflected light beam from the mirror-finished layer 21 are low in signal level as compared with the RF sum signal RF and focus error signal FE generated based on the light beam reflected by the lead-in area 15, as will be seen from FIGS. 8A and 8B. Thus, the RF sum signal RF and focus error signal FE generated based on the reflected light beam from the lead-in area 15 will positively be detected. Therefore, the light beam from the optical pickup 32 can positively be focused on the lead-in area 15 and data recorded in the lead-in area 15 can be read with a high accuracy.

As in the above, a light beam is first directed towards the lead-in area 15 in the optical disc 1 to read the control data recorded in the lead-in area 15 and required for reading at least data such as audio information and the like recorded in the first and second recording layers 4 and 6. Based on the control data read from the lead-in area 15, it is judged whether the first recording layer 4 is provided in the optical disc 1 loaded in the optical disc player. Also, based on data indicating the reflectance of the first and second recording layers 4 and 6, there are selected a gain of the amplification circuit, for example, the RF amplifier 48, and loop gain of the servo control circuit 50 which will further be described later, with which the data recorded in the first and second recording layers 4 and 6 is read. Then, the objective lens 35 is moved axially thereof based on the control signal from the system controller 52, and beam spot focused by the objective lens 35 is moved to either of the first and second recording layers 4 and 6. In this condition, the focus servo and tracking servo loops formed by the servo control circuit 50 have already been closed, and the optical disc 1 is driven by the spindle motor 31 to rotate at a constant linear velocity.

Thus, data recorded in the lead-in area 15 of the optical disc 1 according to the present invention is first read out, so the data recorded in the first recording layer 4 starts being read after reading of the data recorded in the lead-in area 15. By recording, in the lead-in area 15, minimum necessary control data for reading the data recorded in the first and second recording layers 4 and 6, either of the first and second recording layers 4 and 6 can be selected and data recorded in these first and second recording layers 4 and 6 can be read out.

Since data recorded in the lead-in area 15 of the second recording layer 6 provided in this optical disc 1 according to the present invention is read out, data recorded in the second recording layer 6 can be read, after reading the lead-in area 15, by a conventional optical disc player, by setting the reflectance of the second recording layer 6 for an incident light beam to a one enabling data read by the conventional optical disc player adapted to play an optical disc having a high reflectance. Thus, the optical disc 1 according to the present invention is interchangeable with the conventional optical disc.

After the data recorded in the lead-in area 15 is read, either of the first and second recording layers 4 and 6 is selected based on the read data and scan is started with the light beam focused on the first or second recording layer 4 or 6, a return light from the first or second recording layer 4 or 6 is detected by the photodetector 36 with the four-element detector 41 as in the above. The detection signal is supplied to the RF amplifier 48. The detection signal supplied from the photodetector 36 to the RF amplifier 48 is computed to extract a reading RF signal, tracking error signal TE, focus error signal FE, etc.

The extracted reading RF signal is supplied to a demodulation circuit 53, and the tracking error signal TE and focus error signal EF are supplied to the servo control circuit 50.

Based on the supplied focus error signal FE, push-pull signal PP, track jump command and access command supplied from the system controller 52 including a microcomputer, and detection information of the rotation speed from the spindle motor 31, the servo control circuit 50 will generate various servo drive signals to control the actuator 37 and feed mechanism 33 by means of a drive circuit 49 for focusing and tracking and also the spindle motor 31 for run at a constant linear velocity (CLV).

The demodulation circuit 53 binarizes the reading RF signal supplied from the RF amplifier 48 to demodulate it by the EFM (eight to fourteen modulation) method for example and supplies the modulation result to an error correction circuit 54. The error correction circuit 54 corrects error in data by the CIRC (cross interleaved Reed-Solomon coding) method. The data whose error has been thus corrected is supplied to a D/A converter 55 in which it will be converted from digital to analog and provided to outside.

Also the system controller 52 is supplied with a control signal for an operation of an operation unit 56 by the user, and supplies a control signal to a display unit 57 which indicates various states of operation.

Note that for reading data recorded in one of the first or second recording layers 4 and 6 whichever is lower in reflectance, a control for an increased gain of the reading RF signal is desirable.

### Industrial Applicability

As having been described in the foregoing, the optical recording medium according to the present invention has provided in an area where the transmission of light beam will not be attenuated the lead-in area having recorded therein necessary data for at least data reading. So, even if the optical disc has a plurality of recording layers provided therein, data recorded in the lead-in area can be read accurately and thus data such as audio information, video information, etc. recorded in each recording layer can accurately be read out and reproduced.

Also, since necessary data for at least data reading, recorded in the lead-in area provided in an area which will not be influenced by other recording layer, is read out before data is read from each recording layer, a desired recording layer can be selected positively for positive reading a desired data.

## Claims

1. An optical recording medium comprising:
a light-transmissive substrate;
a first recording layer provided on one side of the substrate;
a second recording layer provided over the first recording layer and having a lead-in area having recorded therein necessary data for at least data reading; and
an intermediate layer provided between the first and second recording layers;
the first recording layer being provided at the outside of the lead-in area.

2. The optical recording medium as set forth in Claim 1, wherein the lead-in area has recorded therein a part of necessary data for reading data recorded in at least the first recording layer.

3. The optical recording medium as set forth in Claim 1, wherein the lead-in area has recorded therein data concerning the reflectance of the first recording layer.

4. The optical recording medium as set forth in Claim 1, wherein the lead-in area has recorded therein data indicating that the first recording layer is provided.

5. The optical recording medium as set forth in Claim 1, wherein of the first and second recording layers, one is higher in reflectance than the other.

6. An optical recording medium comprising:
a light-transmissive substrate;
a first recording layer provided on one side of the substrate;
a second recording layer provided over the first recording layer and having a lead-in area having recorded therein necessary data for at least data reading; and
an intermediate layer provided between the first and second recording layers;
at least a part of the side opposite to the lead-in area of the first recording layer being mirror-finished.

7. The optical recording medium as set forth in Claim 6, wherein the lead-in area has recorded therein a part of necessary data for reading data recorded in at least the first recording layer.

8. The optical recording medium as set forth in Claim 6, wherein the mirror-finished part of the first recording layer is disposed in the direction of the start position for reading data in the lead-in area of the second recording layer.

9. The optical recording medium as set forth in Claim 6, wherein in the first recording layer, data is recorded following the mirror-finished part.

10. The optical recording medium as set forth in Claim 6, wherein the lead-in area has recorded therein data concerning the reflectance of the first recording layer.

11. The optical recording medium as set forth in Claim 6, wherein the lead-in area has recorded therein data indicating that the first recording layer is provided.

12. The optical recording medium as set forth in Claim 6, wherein of the first and second recording layers, one is higher in reflectance than the other.

13. An optical recording medium comprising;
a light-transmissive substrate; and
at least a first recording layer and second recording layer, any one of which is provided on one side of the substrate, the other recording layer being provided over the one recording layer with an intermediate layer being provided between the first and second recording layers;
there being provided a lead-in area having recorded therein necessary data for at least data reading.

14. The optical recording medium as set forth in Claim 13, wherein the lead-in area has recorded therein a part of necessary data for reading data recorded in at least the first recording layer.

15. The optical recording medium as set forth in Claim 13, wherein the lead-in area has recorded therein data concerning the reflectance of the first recording layer.

16. The optical recording medium as set forth in Claim 13, wherein the lead-in area has recorded therein data indicating that the first recording layer is provided.

17. The optical recording medium as set forth in Claim 13, wherein of the recording layers, one is lower in reflectance than the other.

18. A method for reading an optical recording medium including a light-transmissive substrate, and at least a first recording layer and second recording layer, any one of which is provided on one side of the substrate, the other recording layer being provided over the one recording layer with an intermediate layer being provided between the first and second recording layers, there being provided a lead-in area having recorded therein necessary data for at least data reading, the method comprising steps of:
reading data recorded in the lead-in area of the second recording layer in the optical recording medium; and
reading data recorded in the first recording layer.

19. A method for reading an optical recording medium including a light-transmissive substrate, a first recording layer provided on one side of the substrate, a second recording layer provided over the first recording layer and having a lead-in area having recorded therein necessary data for at least data reading, and an intermediate layer provided between the first and second recording layers, the first recording layer being provided at the outside of the lead-in area, the method comprising steps of:
reading data recorded in the lead-in area of the second recording layer in the optical recording medium; and
reading data recorded in the first recording layer.

20. A method for reading an optical recording medium including a light-transmissive substrate, a first recording layer provided on one side of the substrate, a second recording layer provided over the first recording layer and having a lead-in area having recorded therein necessary data for at least data reading, and an intermediate layer provided between the first and second recording layers, at least a part of the side opposite to the lead-in area of the first recording layer being mirror-finished, the method comprising steps of:
reading data recorded in the lead-in area of the second recording layer in the optical recording medium; and
reading data recorded in the first recording layer.

21. An optical recording medium comprising:
a substrate;
a first recording layer provided on one side of the substrate;
a second recording layer provided over the first recording layer; and
an intermediate layer provided between the first and second recording layers;
the first and second recording layers being disposed to deviate from each other in the direction of the layer plane.

22. The optical recording medium as set forth in Claim 21, wherein the second recording layer is so provided over the first recording layer as to be read more early than the first recording layer.

23. The optical recording medium as set forth in Claim 22, wherein the second recording layer is provided with the recording start position thereof being projected beyond the recording start position of the first recording layer in the direction of layer plane.

24. The optical recording medium as set forth in Claim 23, wherein the other ends of the first and second recording layers, respectively, lie in the same plane.

25. The optical recording medium as set forth in Claim 21, wherein the second recording layer has a lead-in area in which necessary data for at least data reading and a data recording area, the lead-in area being disposed in a position where it is read more early than the data recording area.

26. The optical recording medium as set forth in Claim 21, wherein the lead-in area has recorded therein a part of necessary data for reading data recorded in at least the first recording layer.

27. The optical recording medium as set forth in Claim 21, wherein the lead-in area has recorded therein data concerning the reflectance of the first recording layer.

28. The optical recording medium as set forth in Claim 21, wherein the lead-in area has recorded therein data indicating that the first recording layer is provided.

29. The optical recording medium as set forth in Claim 21, wherein of the first and second recording layers, one is higher in reflectance than the other.

30. A method for reading an optical recording medium including a substrate and a first recording layer provided over the substrate and having an lead-in area, the method comprising steps of:
reading data recorded in the lead-in area;
judging, based on the data read from the lead-in area, whether there exists a second recording layer between the first recording layer and substrate; and
reading the second recording layer based on control data recorded in the lead-in area when it is determined that the second recording layer exists.
